# EUROPEAN PATENT SPECIFICATION

(11) **EP 3 117 193 B1**
(45) Date of publication and mention of the grant of the patent: **07.10.2020**
(21) Application number: 15715838.7
(22) Date of filing: 12.03.2015
(51) Int. Cl.: G01K 7/06

(54) **THERMOCOUPLE AND METHOD FOR MAKING THE SAME**
THERMOELEMENT UND VERFAHREN ZUR HERSTELLUNG DAVON
THERMOCOUPLE ET PROCÉDÉ POUR SA RÉALISATION

(30) Priority: 13.03.2014 IT GE20140024
(43) Date of publication of application: 18.01.2017
(73) Proprietor: Castfutura S.p.A., 24030 Terno d'lsola (Bergamo) (IT)
(72) Inventor: OFFREDI, Giorgio, I-23851 Galbiate (LC) (IT); POZZI, Fabio, I-23801 Calolziocorte (LC) (IT)
(74) Representative: Karaghiosoff, Giorgio Alessandro
(86) International application number: PCT/IB2015/051816
(87) International publication number: WO 2015/136483

(56) References cited:
- WO-A2-2013/021341
- GB-A- 1 379 546
- JP-A- H07 174 641
- US-A- 3 291 649

## Description

The present invention relates to a thermocouple comprising a first conductor element and a second conductor element, which first and second conductor elements are brought in electrically conductive contact at one detecting end, so called hot junction, obtained by joining a terminal of the first conductor element with a corresponding terminal of the second conductor element, such to generate at the two free ends of each conductor element, so called cold junction, a potential difference that is a function of the temperature detected at the detecting end.

There is further provided a supporting body intended to support the thermocouple such to electrically insulate said two conductor elements one with respect to the other.

The free ends of each one of the two conductor elements are connected each one to two corresponding transmission conductors, a first and a second transmission conductor respectively, for transmitting the electrical signal generated by the potential difference to a measuring means or to an electromagnet.

At least one of the two transmission conductors is covered by an electrical insulating and protecting sheath, while the other one of the two conductor elements is connected by its free end to the corresponding transmission conductor through the supporting body made at least partially of an electrically conductive material.

Particularly the thermocouple of the present invention can be made according to one or more of the characteristics of the patent application GE2012A000001, whose contents is to be considered as an integral part of the present description.

Particularly one of the two transmission conductors may be composed at least partially of a tubular body inside which there is provided the transmission conductor covered by the protecting sheath, while for the remaining part the tubular body extends in the direction of the cold junction by an elongated element.

Preferably the elongated element has a corrugated profile, such to increase the flexibility of the transmission conductor in order to facilitate the proper positioning in the device whose temperature changes are desired to be measured.

Moreover the elongated element can be connected to a wire for transmitting the electrical signal to the cold junction.

The arrangement just described is the common arrangement of a thermocouple known in the prior art.

The two conductor elements composing the hot junction are a positive one and the other is a negative one, with respect to a zero value, and the voltage generated is given by the algebraic sum thereof.

Such conductor elements are placed in contact by two ends thereof at the so called hot junction and if a temperature difference occurs at such junction it is possible to measure a potential difference at the free ends of said two conductors, so called cold junction, which is a function of the temperature difference.

Thus the thermocouples generally are used as temperature sensors and accordingly as flame monitoring in burners for household appliances also for burners placed in closed cavities such as for example cooking ovens.

The present invention generally relates to thermocouples for flame monitoring and particularly burners of gas ovens and catering appliances.

As said above, one example of such thermocouples is described in the application GE2011A000111 Another example of a prior art thermocouple is described in JP H07174641 A.

Since thermocouples are widely used, the market is continuously asking for improvements thereof, particularly arrangements aiming at reducing costs for making thermocouples are required while keeping their functionality and efficiency unchanged, in the several installation fields.

The aim of the present invention is to make a thermocouple having such arrangements, such to satisfy at best the different application requirements of the market.

With a particular reference to thermocouples for ovens, the fact of carrying out arrangements aiming at facilitating the installation thereof and at reducing the number of components would allow a considerable saving to be obtained.

Moreover even a study about the type of materials used for making the thermocouples would cause costs to be reduced.

The present invention achieves the above aims by making a thermocouple such as described above, wherein the detecting head has fastening members for fastening it to the supporting body, such to guarantee the electrical conductivity between the detecting head and the supporting body.

There are several advantages of the arrangement just described.

First of all the supporting body has two functions, since it supports and insulates the conductor elements of the thermocouple and at the same time it acts at least partially as a transmission conductor.

As it will be clear from the embodiments shown and annexed to the present patent application, such aspect is particularly advantageous as regards the construction point of view, by facilitating the assembly of the components of the thermocouple and by promoting the fastening of the transmission conductor to the supporting body.

Then on the basis of the shapes selected for the supporting body it is possible to obtain advantages for making automatically the several elements of the thermocouple assembly, for example by making the whole more compact and easy to handle preventing the wires from getting entangled during the assembling.

Secondly also the fact of making the detecting head with fastening members for fastening it to the supporting body has advantageous aspects.

Preferably the detecting head is welded to the supporting body in order to obtain the electrical conductivity and the presence of such fastening members allow a much more reliable welding to be obtained and with welding waste practically equal to zero. Moreover the lifetime of the welding electrodes is very increased. Also the electrical contact resulting from the goodness of the welding is accordingly improved.

The further variant embodiments that will be described here below are directed at improving the characteristics of the thermocouple of the present invention both as regards the mechanical aspect, and as regards the aspect of facilitating the assembling and the construction thereof.

Advantageously, the detecting head is composed of a tubular body inside which the conductor element is housed, the fastening members being made as one piece with the tubular body.

Moreover according to a preferred embodiment, the supporting body is composed of a shell element obtained by joining two half-shells.

At least one of the two half-shells provides a space for housing the fastening members, which is made within the thickness of the walls of the half-shell.

From the mechanical perspective such variant provides a further improvement of the thermocouple of the present invention since in addition to the mechanical strength deriving from the closure between the two half-shells of the tubular part of the detecting head, there is provided also the mechanical strength of the welded surface of the fastening members.

Preferably the fastening members are composed of two fastening tabs diametrically opposite with respect to the longitudinal axis of the tubular body and obtained from the walls of the tubular body.

The fastening tabs are simple to be made and to be obtained starting from the walls of the tubular body.

Moreover their shape facilitates the welding and the making of the housing space into the half-shell.

According to a possible embodiment, the tubular body has a detecting end and an end for the connection thereof to the supporting body, the two fastening tabs being placed at the connection end.

According to a further embodiment, the free end of at least one of the two conductor elements provides a housing seat for the coupling to the terminal of the corresponding transmission conductor.

In the thermocouples known in the prior art the free end of the conductor element is connected to the transmission conductor through a welding made edge to edge by spot welding processes or preferably TIG type without a filler material.

On the contrary according to the variant described the conductor element or the transmission conductor can be machined such to obtain a housing seat overlapping the transmission conductor or the conductor element respectively and it is welded by a process that can be spot welding, TIG welding without a filler material or ultrasonic welding or another process suitable for obtaining a good mechanical strength of the welding joint.

Such connection method allows a higher mechanical strength of the welding joint to be obtained with respect to the system welding the two wires edge to edge. Moreover the size of the joint remains of a dimension small enough for being inserted into the tubular body of the detecting head.

The detecting head generally provides the detecting end composed of a tapered conical point with an inner diameter generally slightly greater than the diameter of the wire of the conductor element covered by an insulating sheath.

Preferably the housing seat is composed of a surface having a section complementary, at least partially, with the section of the terminal of the corresponding transmission conductor or conductor element.

Below some variant embodiments of such housing seat will be described.

According to a further embodiment at least one of the two transmission conductors is made of aluminium.

In thermocouples known in the prior art the transmission conductors are composed of rod-like elements made of copper.

The fact of replacing the copper with another metal, particularly aluminium, causes costs to considerably decrease, while keeping the same operating efficiency of the thermocouple.

Currently the main difficulty for which the aluminium is not used derives from the difficulty of welding the aluminium with respect to materials with a considerably higher melting point, such as iron, brass and copper usually used in the joints for electrical connection of thermocouples. Moreover the aluminium exhibits a quick formation of a film of oxide, alumina oxide, causing welding to be very difficult with the known welding systems usually used.

Alumina oxide is hard to be removed by the common deoxidizers used in flame welding, and, if it is not removed during the welding step, it does not allow the two materials to have a close connection which is necessary for obtaining a good mechanical and electrical joint. Even in the case of electric welding where it is not possible to use deoxidizers, such oxide makes it impossible for the two materials to have a close connection since it is interposed therebetween. Moreover the fact of joining two materials often of different nature having melting points that sometimes are very different is difficult to be carried out since when the aluminium reaches the melting point the other material has not reached it yet and the aluminium gets melted making the welding impossible.

Such technical drawback for example may be solved by using a transmission conductor made of aluminium fastened to the corresponding conductor element by ultrasonic welding, laser welding or any other methods known in the prior art avoiding the formation of alumina oxide.

As mentioned above at least one of the transmission conductors is made of aluminium.

According to a possible embodiment both the transmission conductors can be made of aluminium.

Thus it is possible to produce thermocouples for being used for flame monitoring with costs lower than the cost in thermocouples known in the prior art that use transmission conductors made of copper.

In addition to the advantages just described, the use of the aluminium has further advantageous aspects in combination with the presence of the housing seat of the conductor element, since as mentioned above such coupling method allows a joint with a greater mechanical strength to be obtained, guaranteeing an efficient connection also while using aluminium instead of copper.

In the light of the shown advantageous aspects of the thermocouple of the present invention, the present invention further relates also to a detecting head for thermocouples, comprising a tubular body within which at least one conductor element of the thermocouple is housed.

The tubular body has members for fastening it to at least one supporting body of the thermocouple.

The detecting head of the present invention has one or more of the characteristics as an alternative or in combination, described above with reference to the detecting head of the thermocouple of the present invention.

Finally the present invention relates also to a method for making a detecting head of thermocouples.

According to a first embodiment, such method provides to make the detecting head by shearing to size a metal sheet and subsequently forming it by molding.

If the detecting head is composed of a tubular body, the method of the present invention provides the following steps:
a) longitudinally cutting at least a part of the shell surface of the tubular body,
b) cutting transversally to the longitudinal cut such to form at least one edge composed of said shell surface,
c) folding the edge in a direction substantially perpendicular to the longitudinal axis of the tubular body.

Thus, as regards production, the making of the detecting head is facilitated starting from a tubular body.

According to a possible embodiment of the method of the present invention, step b) provides a cut transversal to the longitudinal cut such to form two edges composed of the shell surface of the tubular body.

These and other characteristics and advantages of the present invention will be more clear from the following description of some embodiments shown in the annexed drawings wherein:
Fig. la is a perspective view of the thermocouple of the present invention;
Fig. 1b is a detail of figure 1a;
Fig. 2 is a section of the thermocouple of the present invention along a longitudinal plane thereof, according to a possible embodiment;
Fig. 3 is a detail of the thermocouple of the present invention;
Figs. 4a and 4b are a preferred embodiment of the thermocouple of the present invention;
Figs. 5a, 5b and 5c are two possible variants of the coupling of a conductor element to a corresponding transmission conductor, belonging to the thermocouple of the present invention;
Fig. 6 is a possible embodiment of the detecting head of the present invention.

It is specified that the figures annexed to the present patent application show some possible embodiments, but such embodiments have to be intended merely for illustrative purpose and not as a limitation of the inventive concept of the present invention that is about making a thermocouple and its components, such to keep a high efficiency thereof while reducing the production costs.

Particularly, according to a first embodiment, the thermocouple of the present invention comprises a first conductor element and a second conductor element, which are brought in electrically conductive contact at one detecting end, obtained by joining a terminal of the first conductor element with a corresponding terminal of the second conductor element, such to generate at the two free ends of each conductor element, a potential difference that is a function of the temperature detected at the detecting end.

The free ends of each one of the two conductor elements are connected each one to two corresponding transmission conductors 21 and 22, at least one of the two transmission conductors 22 being covered by an electrical insulating and protecting sheath.

As mentioned above and such as shown in figure la, the invention mainly relates to thermocouples for flame monitoring in household appliances such as for example burners of ovens.

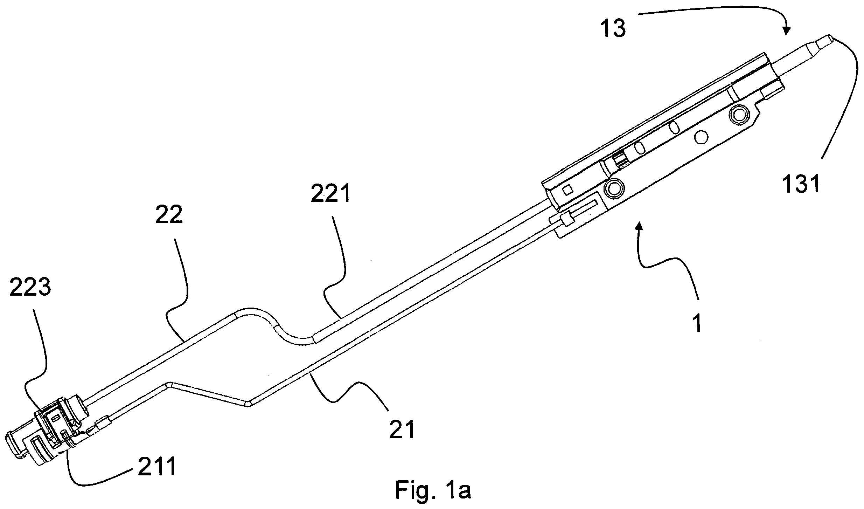

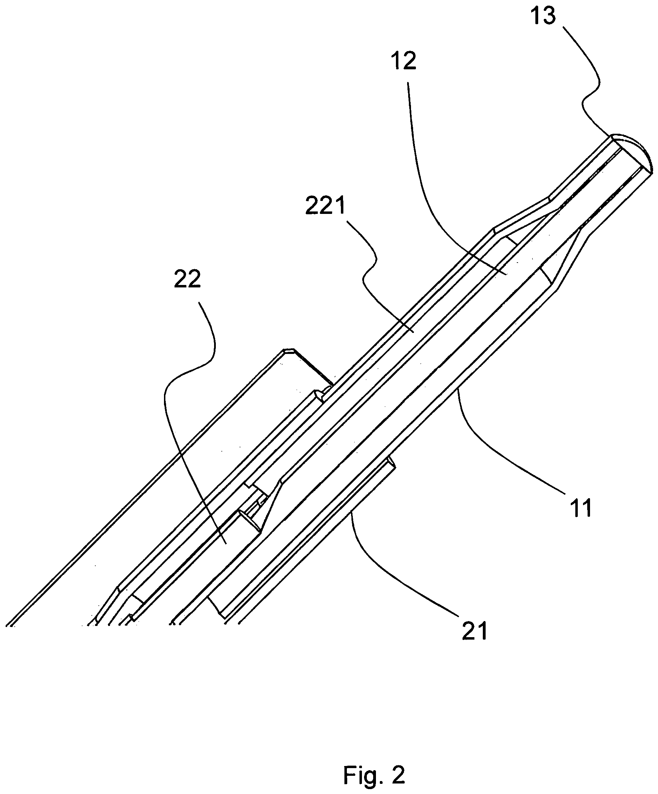

Particularly figures 1a and 2 show a possible embodiment of the arrangement of the thermocouple just described.

According to such variant embodiment the thermocouple comprises a first conductor element 11 and a second conductor element 12 of which the first conductor element 11 is composed of a tubular element of a first metal and a second conductor element 12 composed of a rod-like element of a second metal.

The rod-like element 12 is fitted into the tubular element 11.

The hot junction is composed of a detecting end belonging to a detecting head 13, obtained by pressing the end of the first conductor element 11 against the corresponding end of the second conductor element 12.

According to the variant shown in the figures, the side surface of the detecting head 13 at least partially is the first conductor element 11.

The rod-like element 12 is connected to a transmission conductor 22 covered by an electrical insulating and protecting sheath 221, while the tubular element 11 is connected to a transmission conductor 21 made of electrically conductive material.

There is further provided a supporting body 1 intended to support the thermocouple such to electrically insulating the two conductor elements 11 and 12 one with respect to the other.

Particularly the conductor element 11 is connected to the corresponding transmission conductor 21 through the supporting body 1 at least partially made of electrically conductive material.

In the case the transmission conductor is made of aluminium the fastening to the supporting body 1 is a particularly crucial aspect since the welding, preferably by laser welding, of the aluminium does not have the same mechanical strength as the copper.

Accordingly, in order to limit the shearing stresses and in order to improve the welding performance, it is possible to make a housing area within the supporting body 1 for the transmission conductor 21.

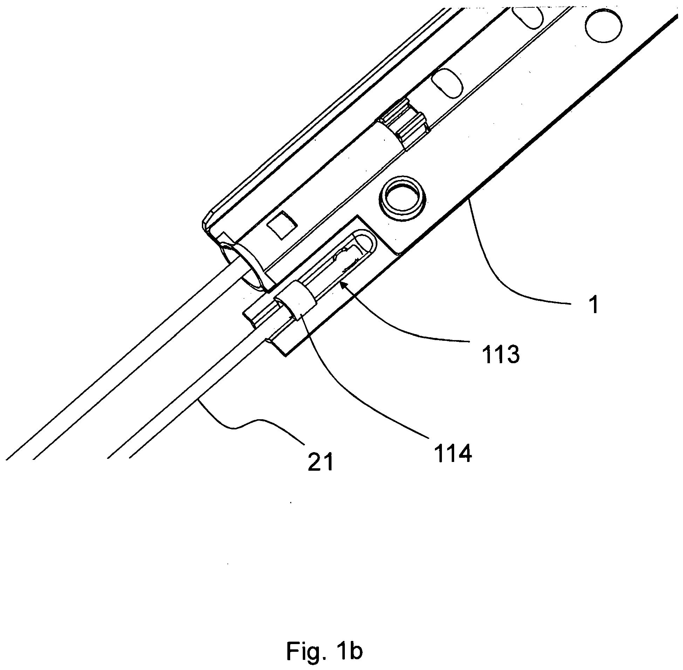

Such housing area 113 is shown in figure 1b and it has a strap 114 intended to partially cover the external surface of the transmission conductor 21 such to limit the movements thereof while protecting its welding to the supporting body.

As it is clear from figure 1b the housing area 113 and the strap 114 can be directly obtained from the walls of the supporting body, by machining it on one side and on the other side such to obtain a space enough for inserting the transmission conductor 21.

The transmission conductor 21 then can be fastened to the supporting body by welding, preferably laser welding, between the external walls thereof and the inner walls of the housing area 113.

With a particular reference to figure 1a, the covered transmission conductor 22 passes within the supporting body 1 and it emerges along the longitudinal direction thereof, ending by a terminal element 223, while the transmission conductor 21 is welded at one end thereof to the supporting body 1 and at the other one to a further terminal element 211.

The two terminal elements 211 and 223 can be connected to measuring apparatuses or to an electromagnet for detecting the temperature present at the detecting head 13, since the potential difference between the two terminals 211 and 223 is equal to the potential difference at the cold junction of the thermocouple, that is at the free ends of the conductor element 11 and of the conductor element 12.

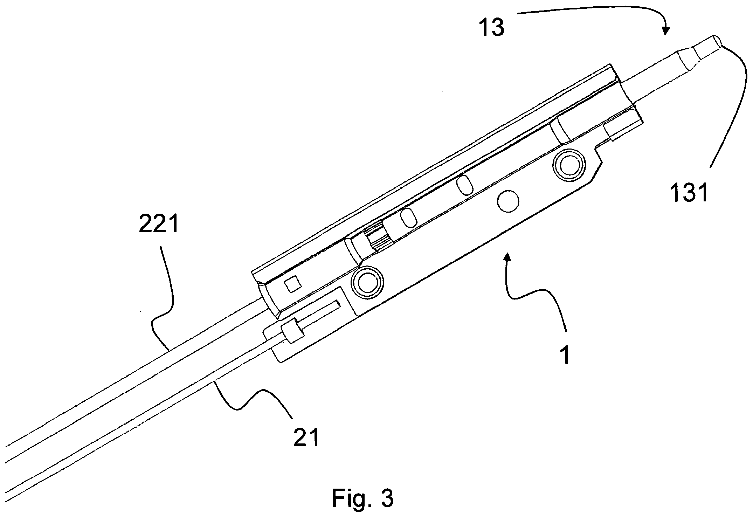

The detecting head 13 is inserted into the supporting body 1, figure 3, and the contact of the side walls of the detecting head with the supporting body 1 guarantees the electrical conductivity from the detecting end 131 to the transmission conductor 21 welded to the supporting body 1.

As it will be disclosed below, preferably the detecting head 13 is welded to the supporting body 1.

Obviously the second transmission conductor 22 connected to the second conductor element 12 is the phase conductor, while the first conductor 11 connected to the first transmission conductor 21 through the supporting body 1 is the neutral conductor.

As it is seen in the figures, the supporting body 1 is composed of a box-like body, that can be easily obtained by machining a metal sheet.

The thermocouple of the present invention has a detecting head 13 that provides fastening members for fastening it to the supporting body 1, such to guarantee the electrical conductivity between the detecting head 13 and the supporting body 1.

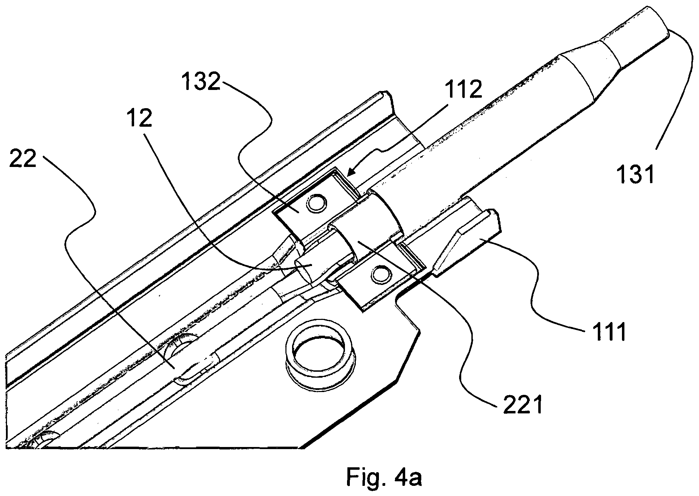

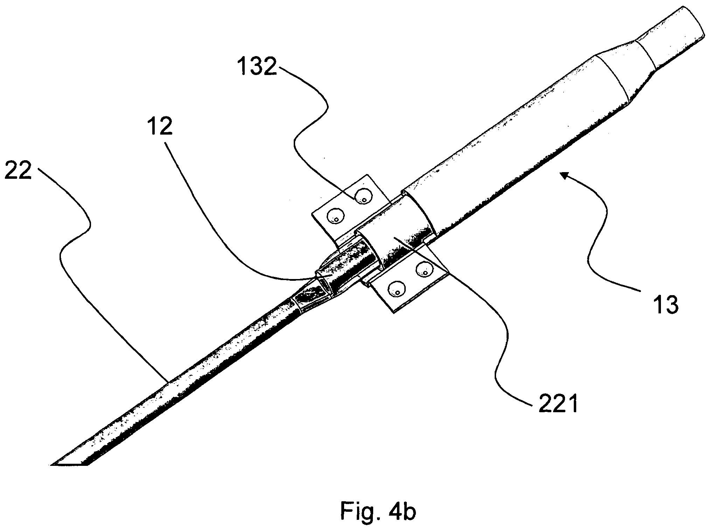

Figures 4a and 4b show such embodiment, according to which the detecting head 13 is composed of a tubular body within which the conductor element 12 is housed.

Preferably the fastening members are made as one piece with the tubular body.

Particularly figure 4a shows the conductor element 12 coupled to the transmission conductor 22 and covered by an insulating sheath 221.

The conductor element 12 is inserted within the tubular body of the detecting head 13, such to obtain the hot junction at the detecting end 131, such as described above.

The side walls of the tubular body of the detecting head 13 enable the electrical transmission from the detecting end 131 to the transmission conductor 21 through the supporting body 1.

Particularly the supporting body 1 is composed of a shell element obtained by joining two half-shells 111, at least one of the two half-shells 111 providing a space 112 for housing the fastening members.

The housing space 112 is made in the thickness of the walls of the half-shell 111.

With a particular reference to figures 4a and 4b the fastening members are composed of two fastening tabs 132 diametrically opposite with respect to the longitudinal axis of the tubular body and obtained from the walls thereof.

Each fastening tab 132 is housed into a corresponding housing space 112 and in that point it is welded to the half-shell 111.

Thus the detecting head 13 is firmly fastened to the supporting body 1.

As mentioned the tubular body has a detecting end 131 and an end connecting it to the supporting body 1, the two fastening tabs 132 being placed at the connection end.

Figures 4a and 4b further show a particular arrangement of the coupling between the conductor element 12 and the transmission conductor 22.

According to one embodiment of the thermocouple of the present invention it is possible to provide the free end of the conductor element 12 to have a housing seat for the connection with the terminal of the corresponding transmission conductor 22.

Obviously, such as in figure 4b, the housing seat can be provided also on the terminal of the transmission conductor 22 for housing the free end of the conductor element 12.

Particularly the joining between the conductor element 12 and the transmission conductor 22 occurs by a form fit.

Preferably the housing seat is composed of a surface having a section complementary, at least partially, with the section of the terminal of the corresponding transmission conductor 22 or vice versa.

For example in the particular case of figure 4b the terminal of the transmission conductor 22 has been machined such to house the conductor element 12, generally made of constantan.

The terminal of the transmission conductor 22 has a convex surface intended to house the external concave surface of the constantan wire 12.

Thus the encumbrance of the constantan 12-transmission conductor 22 joint is reduced which can be covered by the insulating sheath 221 and inserted into the detecting head 13.

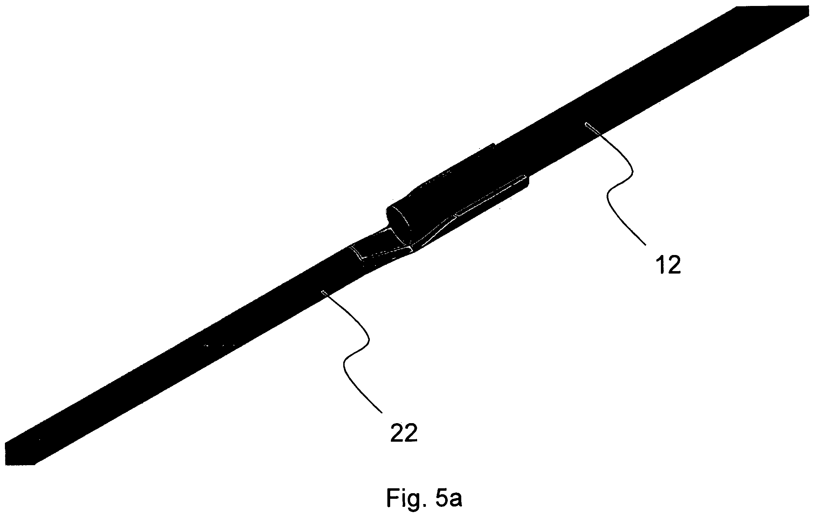

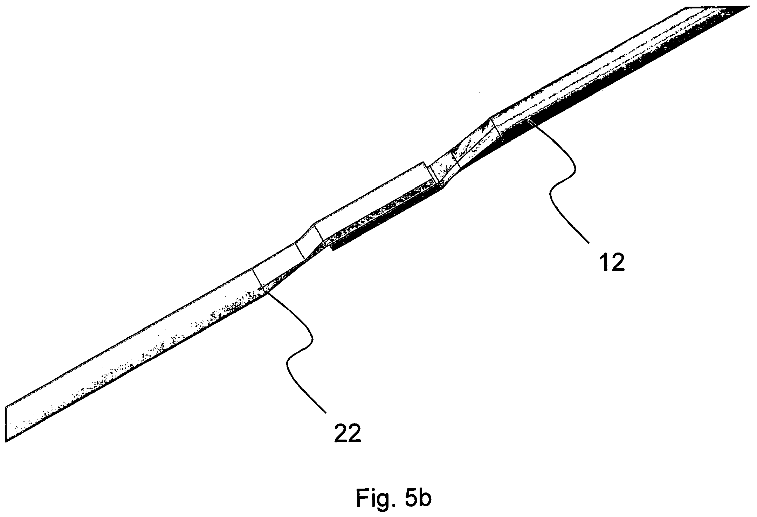

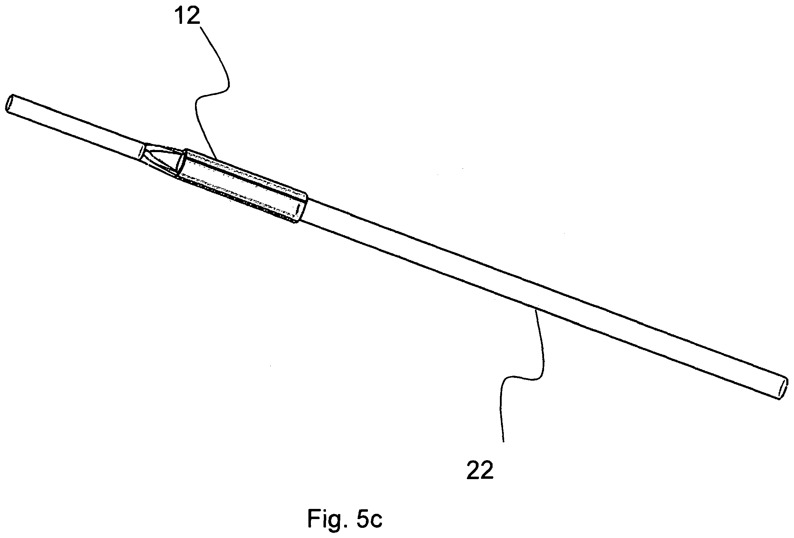

Some possible form fits are shown in figures 5a, 5b and 5c.

Figure 5a better shows the coupling as in figures 4a and 4b, wherein the constantan wire 12 is made preferably by a semicircular pressed portion to be welded on the transmission conductor 22.

As an alternative the constantan wire 12 can be made with a flat pressed portion to be welded on the transmission conductor 22 composed of a wire of a round bar or it also having a flat pressed portion too, such as shown in figure 5b.

With a particular reference to the variant embodiment shown in figure 5a, it is specified that the transmission conductor 22 can be machined such to completely surround the external surface of the constantan wire 12.

Likewise also the constantan wire 12 can be machined such to completely surround the external surface of the transmission conductor 22, such as shown in figure 5c.

Figure 5c outlines the fact that, in order to obtain the form fit, the housing seat can be obtained both on the transmission conductor 22 and on the conductor element 12.

Finally it is specified that the connection can be made according to a further embodiment, that is by bringing the two materials in contact edge to edge and by using a bushing that surrounds the external surfaces of the terminal parts in contact of the transmission conductor 22 and of the conductor element 12.

The transmission conductor 21 and/or the transmission conductor 22 can be made of any metal known in the prior art, such as for example copper, but according to one embodiment they can be made of aluminium.

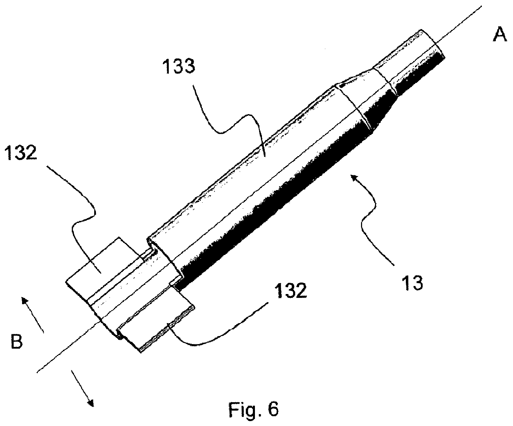

Figure 6 shows a possible embodiment of the detecting head 13 of the present invention.

Such detecting head 13 has all the characteristics, as an alternative or in combination, described above, particularly it has the fastening tabs 132 obtained from the tubular body of the detecting head 13 itself.

Particularly the tabs 132 can be obtained by following the method steps of the present invention.

A longitudinal cut is carried out, namely a cut along a part of the surface of the tubular body, parallel to the longitudinal axis A thereof.

Then a transverse cut is carried out, particularly perpendicular, to the longitudinal cut such to allow the tabs 132, obtained by such cuts, to be rotated and folded, in the direction of arrows B.

Obviously on the basis of the transverse cut it will be possible to decide the support plane of the two tabs 132.

## Claims

1. Thermocouple comprising a first conductor element (11) and a second conductor element (12), which first and second conductor elements are brought in electrically conductive contact at one detecting head (13), so called hot junction, obtained by joining a terminal of said first conductor element (11) with a corresponding terminal of said second conductor element (12), such to generate at the two free ends of each conductor element, so called cold junction, a potential difference that is a function of the temperature detected at the detecting head (13), there being provided a supporting body (1) intended to support said thermocouple such to electrically insulate said two conductor elements one with respect to the other, the free ends of each one of said two conductor elements being connected each one to two corresponding transmission conductors (21, 22), a first and a second transmission conductor respectively, for transmitting the electrical signal generated by the potential difference to a measuring means, at least one of said two transmission conductors (12) being covered by an electrical insulating and protecting sheath (121), the other one of said two conductor elements (11) being connected by its free end to the corresponding transmission conductor (21) through said supporting body (1) made at least partially of an electrically conductive material,
wherein
said detecting head (13) has fastening members for fastening it to said supporting body (1), such to guarantee the electrical conductivity between said detecting head (13) and said supporting body (1);
wherein said detecting head (13) is composed of a tubular body that constitutes said first conductor element (11), inside which said second conductor element (12) is housed, the fastening members being made as one piece with said tubular body;
**characterized in that**
said supporting body (1) is composed of a shell element obtained by joining two half-shells (111), at least one of the two half-shells (111) providing a space (112) for housing said fastening members (132), which housing space(112) is made within the thickness of the walls of said half-shell (111);
wherein the fastening members (132) are composed of two fastening tabs (132) diametrically opposite with respect to the longitudinal axis (A) of said tubular body and obtained from the walls of said tubular body;
and wherein said space (112) for housing corresponds to the said fastening tabs(132) which are welded to the half shell (111) at that point.

2. Thermocouple according to claim 1 in which each fastening tab (132) is provided with notches or indentations.

3. Thermocouple according to claim 1 or 2, wherein said tubular body has a detecting end (131) and an end for the connection thereof to said supporting body (1), the two fastening tabs (132) being placed at said connection end.

4. Thermocouple according to claim 1 , wherein the free end of at least one of the two conductor elements (11, 12) provides a housing seat for the coupling to the terminal of the corresponding transmission conductor (21, 22) or vice versa.

5. Thermocouple according to claim 4 , wherein the housing seat is composed of a surface having a section complementary, at least partially, with the section of the terminal of the corresponding transmission conductor (21, 22).

6. Thermocouple according to claim 1 , wherein at least one of the two transmission conductors (21, 22) is made of Aluminum.

7. Supporting body (1) with a detecting head (13) for thermocouples, the detecting head comprising a tubular body that constitutes a first conductor element (11) of a thermocouple inside which a second conductor element of said thermocouple is to be housed, the supporting body (1) intended to support said thermocouple such to electrically insulate said two conductor elements one with respect to the other,
**characterized in that**
said tubular body has fastening members composed of two tabs diametrically opposite with respect to the longitudinal axis of the said tubular body and obtained from the walls of said tubular body, for fastening it into the supporting body (1) of the thermocouple;
said supporting body is composed of a shell element obtained by joining two half-shells, at least one of the two half-shells providing a space for housing said fastening members which housing space is made within the thickness of the walls of said half shell;
said space for housing corresponds to said fastening tabs which are welded to the half-shell at that point.

8. Method for making a supporting body with a detecting head for thermocouples according to the claim 7, **characterized in that** the method provides to make said detecting head by shearing to size a metal sheet and subsequently forming it by molding.

9. Method according to claim 8, wherein the detecting head is composed of a tubular body, said method providing the following steps:
a) longitudinally cutting at least a part of the shell surface of the tubular body,
b) cutting transversally to the longitudinal cut such to form at least one edge composed of said shell surface,
c) folding said edge in a direction substantially perpendicular to the longitudinal axis of the tubular body, forming two diametrically opposite tabs;
d)providing each tab with a notch or indentation.

10. Method according to claim 9, wherein step b) provides a cut transversal to the longitudinal cut such to form two edges composed of the shell surface of the tubular body.

## Patentansprüche

1. Thermoelement mit einem ersten Leiterelement (11) und einem zweiten Leiterelement (12), bei dem das erste und das zweite Leiterelement an einem Detektionskopf (13), die so genannte heiße Stelle, in elektrisch leitendem Kontakt gebracht werden, welche durch Verbinden eines Endes des ersten Leiterelements (11) mit einem entsprechenden Ende des zweiten Leiterelements (12) erhalten wird, so dass an den beiden freien Enden jedes Leiterelements, die so genannte Kaltstelle, eine Potentialdifferenz erzeugt wird, die eine Funktion der am Detektionskopf (13) erfassten Temperatur ist, wobei ein Tragkörper (1) zum Tragen des Thermoelementes zum elektrischen Isolieren der beiden Leiterelemente gegeneinander vorgesehen ist, wobei die freien Enden jedes der beiden Leiterelemente jeweils mit zwei korrespondierenden Übertragungsleitern (21, 22), d.h. einem ersten und einem zweiten Übertragungsleiter, verbunden sind, zum Übertragen des von der Potentialdifferenz erzeugten elektrischen Signals an ein Messmittel, wobei mindestens einer der beiden Übertragungsleiter (12) von einem elektrischen Isolier- und Schutzmantel (121) umhüllt ist, wobei das andere der beiden Leiterelemente (11) mit seinem freien Ende mit dem entsprechenden Übertragungsleiter (21) durch den zumindest teilweise aus einem elektrisch leitenden Material gebildeten Tragkörper (1) verbunden ist, wobei der Detektionskopf (13) Befestigungselemente zur Befestigung an dem Tragkörper (1) aufweist zur Gewährleistung der elektrischen Leitfähigkeit zwischen dem Detektionskopf (13) und dem Tragkörper (1), wobei der Detektionskopf (13) aus einem rohrförmigen Körper besteht, der das erste Leiterelement bildet (11), innerhalb dessen das zweite Leiterelement (12) aufgenommen ist, wobei die Befestigungselemente einstückig mit dem rohrförmigen Körper ausgebildet sind, **dadurch gekennzeichnet, dass** der Tragkörper (1) aus einem Schalenelement besteht, das durch Zusammenfügen zweier Halbschalen (111) erhalten wird und mindestens eine der beiden Halbschalen (111) einen Raum (112) zum Aufnehmen der Befestigungselemente (132) bereitstellt, welcher Aufnahmeraum (112) innerhalb der Dicke der Wände der Halbschale (111) ausgebildet ist, wobei die Befestigungselemente (132) aus zwei Befestigungslaschen (132) zusammengesetzt sind, die bezüglich der Längsachse (A) des rohrförmigen Körpers diametral gegenüberliegen und in den Wänden des rohrförmigen Körpers eingearbeitet sind, und wobei der Aufnahmeraum (112) den Befestigungslaschen (132) entspricht, die an dieser Stelle mit der Halbschale (111) verschweißt sind.

2. Thermoelement nach Anspruch 1, bei dem jede Befestigungslasche (132) mit Kerben oder Vertiefungen versehen ist.

3. Thermoelement nach Anspruch 1 oder 2, wobei der rohrförmige Körper ein Erfassungsende (131) und ein Ende zum Verbinden desselben mit dem Tragkörper (1) aufweist, wobei die zwei Befestigungslaschen (132) an dem Verbindungsende angeordnet sind.

4. Thermoelement nach Anspruch 1, wobei das freie Ende mindestens eines der beiden Leiterelemente (11, 12) einen Aufnahmesitz zur Kopplung mit dem Ende des entsprechenden Übertragungsleiters (21, 22) oder umgekehrt bereitstellt.

5. Thermoelement nach Anspruch 4, wobei der Aufnahmesitz aus einer Oberfläche mit einem zumindest teilweise komplementären Abschnitt mit dem Abschnitt des Endes des entsprechenden Übertragungsleiters (21, 22) besteht.

6. Thermoelement nach Anspruch 1, wobei mindestens einer der beiden Übertragungsleiter (21, 22) aus Aluminium besteht.

7. Tragkörper (1) mit einem Detektionskopf (13) für Thermoelemente, wobei der Detektionskopf einen rohrförmigen Körper umfasst, der ein erstes Leiterelement (11) eines Thermoelements bildet, in dem ein zweites Leiterelement des Thermoelements untergebracht werden soll, wobei der Tragkörper (1) zum Tragen des Thermoelementes zum elektrischen Isolieren der beiden Leiterelemente gegeneinander vorgesehen ist, **dadurch gekennzeichnet, dass** der rohrförmige Körper Befestigungselemente aufweist, die aus zwei bezüglich der Längsachse des rohrförmigen Körpers diametral gegenüberliegenden Laschen bestehen, die in den Wänden des rohrförmigen Körpers eingearbeitet sind, um dieser in den Tragkörper (1) des Thermoelements zu befestigen, wobei der Tragkörper aus einem Schalenelement besteht, das durch Verbinden von zwei Halbschalen erhalten wird, wobei mindestens eine der beiden Halbschalen einen Raum zur Aufnahme der Befestigungselemente bereitstellt, der innerhalb der Dicke der Wände der Halbschale ausgebildet ist und der Aufnahmeraum den Befestigungslaschen entspricht, die an dieser Stelle mit der Halbschale verschweißt sind.

8. Verfahren zur Herstellung eines Tragkörpers mit einem Detektionskopf für Thermoelemente nach Anspruch 7, **dadurch gekennzeichnet, dass** mit dem Verfahren der Detektionskopf durch Zuschneiden eines Bleches und anschließendes Formstanzen hergestellt wird.

9. Verfahren nach Anspruch 8, wobei der Detektionskopf aus einem rohrförmigen Körper besteht, wobei das Verfahren folgende Schritte aufweist:
a) Längsschneiden zumindest eines Teils der Mantelfläche des rohrförmigen Körpers,
b) Schneiden quer zu dem Längsschnitt, so dass zumindest eine Kante gebildet wird, die sich aus der Mantelfläche zusammensetzt,
c) Falten der Kante in einer Richtung im Wesentlichen senkrecht zur Längsachse des rohrförmigen Körpers unter Bildung von zwei diametral gegenüberliegenden Laschen,
d) Bereitstellen jeder Lasche mit einer Kerbe oder Vertiefung.

10. Verfahren nach Anspruch 9, wobei Schritt b) einen Schnitt quer zu dem Längsschnitt derart bereitstellt, dass zwei Kanten gebildet werden, die aus der Mantelfläche des rohrförmigen Körpers bestehen.

## Revendications

1. Thermocouple comprenant un premier élément conducteur (11) et un second élément conducteur (12), lesquels premier et second éléments conducteurs sont mis en contact électriquement conducteur à une tête de détection (13), appelée soudure chaude, obtenue en joignant une borne dudit premier élément conducteur (11) à une borne correspondante dudit second élément conducteur (12), afin de générer aux deux extrémités libres de chaque élément conducteur, appelé soudure froide, une différence de potentiel qui est une fonction de la température détectée à la tête de détection (13), un corps de support (1) destiné à supporter ledit thermocouple étant prévu de manière à isoler électriquement lesdits deux éléments conducteurs l'un de l'autre, les extrémités libres de chacun desdits deux éléments conducteurs étant chacune connectées à deux conducteurs de transmission correspondants (21, 22), respectivement un premier et un second conducteur de transmission, pour transmettre le signal électrique généré par la différence de potentiel à un moyen de mesure, au moins l'un desdits deux conducteurs de transmission (12) étant recouvert d'une gaine protectrice et isolante électrique (121), l'autre desdits deux éléments conducteurs (11) étant connecté par son extrémité libre à le conducteur de transmission correspondant (21) à travers ledit corps de support (1) réalisé au moins partiellement en un matériau électriquement conducteur, dans lequel ladite tête de détection (13) a des membres de fixation pour la fixer audit corps de support (1), afin de garantir la conductivité électrique entre ladite tête de détection (13) et ledit corps de support (1);
dans lequel ladite tête de détection (13) est composée d'un corps tubulaire constituant ledit premier élément conducteur (11), à l'intérieur duquel ledit second élément conducteur (12) est logé, les membres de fixation étant réalisés en une pièce avec ledit corps tubulaire;
**caractérisé en ce que**
ledit corps de support (1) est composé d'un élément de coque réalisé en joignant deux demi-coques (111), au moins l'une des deux demi-coques (111) prévoyant un espace (112) pour loger lesdits membres de fixation (132), lequel espace de logement (112) est réalisé dans l'épaisseur des parois de ladite demi-coque (111);
dans lequel les membres de fixation (132) sont composés de deux pattes de fixation (132) diamétralement opposées par rapport à l'axe longitudinal (A) dudit corps tubulaire et réalisées à partir des parois dudit corps tubulaire;
et dans lequel ledit espace (112) de logement correspond auxdites pattes de fixation (132) qui sont soudées à la demi-coque (111) à ce point.

2. Thermocouple selon la revendication 1, dans lequel chaque patte de fixation (132) est prévue avec des encoches ou des empreintes.

3. Thermocouple selon la revendication 1 ou 2, dans lequel ledit corps tubulaire a une extrémité de détection (131) et une extrémité pour la connecter audit corps de support (1), les deux pattes de fixation (132) étant placées à ladite extrémité de connexion.

4. Thermocouple selon la revendication 1, dans lequel l'extrémité libre d'au moins l'un des deux éléments conducteurs (11, 12) prévoit un siège de logement pour le couplage à la borne du conducteur de transmission correspondant (21, 22) ou vice-versa.

5. Thermocouple selon la revendication 4, dans lequel le siège de logement est composé d'une surface ayant une section complémentaire, au moins partiellement, à la section de la borne du conducteur de transmission correspondant (21, 22).

6. Thermocouple selon la revendication 1, dans lequel au moins l'un des deux conducteurs de transmission (21, 22) est réalisé en aluminium.

7. Corps de support (1) avec une tête de détection (13) pour thermocouples, la tête de détection comprenant un corps tubulaire constituant un premier élément conducteur (11) d'un thermocouple à l'intérieur duquel un second élément conducteur dudit thermocouple doit être logé, le corps de support (1) est destiné à supporter ledit thermocouple de manière à isoler électriquement lesdits deux éléments conducteurs l'un de l'autre, **caractérisé en ce que** le corps tubulaire a des membres de fixation composés de deux pattes diamétralement opposées par rapport à l'axe longitudinal dudit corps tubulaire et réalisées à partir des parois dudit corps tubulaire, pour le fixer à l'intérieur du corps de support (1) du thermocouple;
ledit corps de support est composé d'un élément de coque réalisé en joignant deux demi-coques, au moins l'une des deux demi-coques prévoyant un espace pour loger lesdits membres de fixation, lequel espace de logement est réalisé dans l'épaisseur des parois de ladite demi-coque;
ledit espace de logement correspond auxdites pattes de fixation qui sont soudées à la demi-coque à ce point.

8. Méthode pour réaliser un corps de support avec une tête de détection pour thermocouples selon la revendication 7, **caractérisée en ce que** la méthode prévoit de réaliser ladite tête de détection par cisaillement pour dimensionner une tôle et ensuite la former par moulage.

9. Méthode selon la revendication 8, dans laquelle la tête de détection est composée d'un corps tubulaire, ladite méthode prévoyant les étapes suivante:
a) couper longitudinalement au moins une partie de la surface de la coque du corps tubulaire,
b) couper transversalement à la coupe longitudinale afin de former au moins un bord composé de ladite surface de la coque,
c) plier ledit bord dans une direction substantiellement perpendiculaire à l'axe longitudinal du corps tubulaire, formant deux pattes diamétralement opposées;
d) prévoir chaque patte avec une encoche ou une empreinte.

10. Méthode selon la revendication 9, dans laquelle l'étape b) prévoit une coupe transversale à la coupe longitudinale afin de former deux bords composés de la surface de la coque du corps tubulaire.
